# EUROPEAN PATENT SPECIFICATION

(11) **EP 3 931 555 B1**
(45) Date of publication and mention of the grant of the patent: **06.11.2024**
(21) Application number: 20706308.2
(22) Date of filing: 27.02.2020
(51) Int. Cl.: G01N 21/954, B08B 9/08, F22B 37/00, F27D 21/00, G01F 23/292, G02B 23/24, G03B 37/00

(54) **INSPECTION CAMERA ARRANGEMENT**
INSPEKTIONSKAMERAANORDNUNG
AGENCEMENT DE CAMÉRA D'INSPECTION

(30) Priority: 27.02.2019 EP 19159606
(43) Date of publication of application: 05.01.2022
(73) Proprietor: Alfa Laval Corporate AB, 221 00 Lund (SE)
(72) Inventor: GROTH, Simen, 5039 Bergen (NO); HOPE, Atle, 5221 Nesttun (NO)
(74) Representative: Alfa Laval Attorneys
(86) International application number: PCT/EP2020/055136
(87) International publication number: WO 2020/174043

(56) References cited:
- JP-A- 2004 356 020
- JP-A- 2007 161 273
- JP-A- 2013 235 186
- JP-A- S62 266 448
- US-A- 4 432 931
- US-A1- 2006 054 189

## Description

### TECHNICAL FIELD

The present invention relates to an inspection camera arrangement for remote visual inspection of an interior of a cargo tank for a fluid, a cargo tank for a fluid comprising the inspection camera arrangement and a method for inspecting an interior surface of the cargo tank for a fluid.

### BACKGROUND ART

Chemical or product tankers are used to transport bulk fluids, e.g. industrial chemicals, commodity chemicals, vegetable oils and petroleum-based chemicals or products. The tankers usually have a double hull construction and may comprise one or more cargo tanks adapted for fluids. The cargo tanks may be made from different chemical resistant materials, for example stainless steel, which is resistant to many chemicals from strong acids to vegetable oils. The inner surface of the cargo tanks may be coated to improve chemical resistance and facilitate cleaning. The cargo tanks may be arranged to carry different chemicals. Each cargo tank may comprise or be connected to an individual piping and pumping system to load and remove the cargo. After removing the content of the cargo from the cargo tank, it is desirable that the tank can be used for carrying any type of fluid as the next cargo.

During transporting of for example petroleum product cargo or similar explosive or flammable cargo it is customary to fill up the remaining volume of the cargo tank with a protective gas, which may be an inert gas. Specifically, oil tankers typically carries oil of different grades and quality that generally produce flammable vapours and gases when loaded for transportation. Even with no cargo on board, there can be harmful flammable gases present in the cargo tank. When the vapour produced by for example an oil cargo is mixed with certain concentration of air primarily containing oxygen, it can result in dangerous explosion. For safety against such explosion, the cargo tank is filled up with the protective gas, which may be provided for example by a separate protective gas, which may be an inert gas, plant or flue gas produced by the ship's boiler. The protective gas may be provided for example by exhaust gas from a diesel combustion engine.

When the cargo is removed from the cargo tank, there may be a certain quantity remaining on board (ROB). This quantity includes the cargo fluids, e.g. cargo chemicals or products, such as oil, water, sludge and sediment inside the cargo tanks and in the associated lines and pumps after the removal of the cargo has been completed. Vapour may be excluded from this ROB quantity but clingage can be included. This amount of ROB should be kept as low as possible. Additionally, to prevent that the purity of the next cargo is not deteriorated, the amount of ROB should be kept low.

To ensure that the cargo tank is properly emptied, inspection personnel has been used to visually check the interior of the tank before next filling. This is very time consuming, especially in view that an inert atmosphere in the tank needs to be replaced with oxygen containing atmosphere for the inspection. After the inspection is performed, the tank needs to be again filled with inert gas. In addition to being time consuming, such inspection is energy requiring and costly. Therefore, there is a desire to facilitate the inspection procedure.

Different arrangements using camera inspection have been used to facilitate the inspection of tank interiors. KR 101541004B1 shows camera inspection by using a foldable stand with controllable vertical length and which can be inserted to a container via a manhole, and the captured images can be transmitted to a mobile phone in real time. However, the foldable stand would not be possible to use in a cargo tank for fluids due to the risk for contamination. JPS63135700 shows an example of another arrangement. However, the arrangement requires a specific loading/unloading device actuated by weights and attached to an internal inspection device. Such arrangement is complicated, and there is a risk for contamination.

JP S62 266448 A discloses a liquid penetrant inspection apparatus used in containment vessels that cannot be entered by persons due to high temperature, radiation, etc. A guide tube guides a cable to an inspection point. The cable is fed into the guide tube and pushed out. The cable includes a fiberscope and conduits for chemicals and air. The chemicals are sprayed by a nozzle pad. The fiberscope is a multi-pixel image guide. The end of the cable is connected to a TV. In case of separate inspection locations, a plurality of guide tubes are provided. A switching device is provided with a guide tube that is turned to the target guide tube.

Further related prior art are found in JP 2013 235186 A, JP 2007 161273 A, US 4 432 931 A, JP 2004 356020 A and US 2006/054189 A1.

### SUMMARY OF THE INVENTION

In view of the prior art, there is still a desire to improve the existing inspection camera arrangements to be suitable for cargo tanks for fluids, i.e. gas and/or liquids. The cargo tank may be for example a chemical cargo tank or a product cargo tank. Especially, there is a desire for an inspection camera arrangement, which can be used in the cargo tank for a fluid, while it can be ensured that the tank interior is not contaminated. Also, it is desirable that the protective gas does not have to be evacuated from the tank. Furthermore, it is desirable that the camera can be brought into the interior of the tank in a simple way. Additionally, it is desirable that as few changes as possible need to made for the existing cargo tanks.

The objectives are attained by an inspection camera arrangement for remote visual inspection of an interior of a cargo tank for a fluid, a cargo tank for a fluid comprising the inspection camera arrangement and a method for inspecting an interior surface of the cargo tank for a fluid as defined in the appended claims.

The present invention thus relates to an inspection camera arrangement for remote visual inspection of an interior of a cargo tank for a fluid, comprising an inspection camera, a cable having a first end connected to the inspection camera and a second end opposite to the first end and a cable support pipe adapted to support a first cable length positioned between the first end and second end of the cable. The cable is glidably arranged within the cable support pipe. The cable support pipe has an elongated shape and has a first pipe end and a second pipe end, and the cable support pipe comprises a first portion and a second portion, wherein the first portion transitions to the second portion at a common transition point. The first portion comprises in a first common plane with the second portion a curved section and/or a section inclined in respect to the second portion. The inspection camera arrangement further comprises a mounting set comprising a flexible sluice and a mounting device, wherein each of the flexible sluice and the mounting device comprises a channel for the inspection camera and at least a portion of the cable and the cable support pipe. The mounting device is configured to be connectable to a tank interface at an upper wall of the tank and the channel of the mounting device is configured to be openable and closable. The flexible sluice comprises a connecting end, which is configured to be connectable to the mounting device, and a receiving end opposite to the connecting end.

By means of the cable support pipe, the inspection camera can be positioned at a transversal distance from an obstacle located in a vertical path defined by an insertion position, i.e. the tank interface, of the inspection camera and the inspection location. Therefore, risk for colliding with the obstacles is decreased.

The curved section and section inclined in respect to the second portion of the first portion of the cable support pipe implies that the inspection camera can be positioned at a transversal distance from an obstacle, while at the same time allowing the cable support pipe to be pushed through a tank interface into the tank.

The curved section of the first portion may be curved in respect to the second portion.

The first pipe end and the second pipe end may be laterally offset from each other in the first common plane. Thus, the transversal distance from the obstacle located in the vertical path may be obtained by means of a simple cable support pipe structure.

The first portion may comprise a section inclined (SI) at an angle of from 5-45° in respect of the second portion in a first common plane. Thereby, the cable support pipe may have a simple structure and shape to position the inspection camera at the desired location.

The second portion may comprise a substantially straight section, which is substantially parallel to a longitudinal extension of the cable support pipe. Thus, the cable support pipe may be easily manufactured, since the structure is simple. Alternatively or additionally, the second portion may comprise a curved section. In this way the transversal distance from an obstacle can be increased in a simple way, i.e. during the positioning of the inspection camera to the desired location.

The first portion may comprise a curved section which transitions to a curved section of the second portion at the common transition point. Thereby, a substantially arch-shaped cable support pipe may be provided, whereby an even smoother insertion and thus positioning of the inspection camera into the interior of the tank may be obtained.

The second pipe end may be configured to be kept outside the interior of the tank. Thereby, the cable support pipe can be manoeuvred in a controlled manner. Additionally, the second pipe end may be associated with a transversally extending protruding portion, which is optionally associated with a holding arrangement. The transversally protruding portion can be used as stopping means, and thus prevent the cable support pipe being accidentally inserted into a tank interior. A handle may improve the ergonomic when the inspection camera is inserted into a tank interior.

The second pipe end may comprise a sealing for preventing escape of protective gas between the cable support pipe and cable.

The cable support pipe may be manufactured of a chemical resistant plastic or metallic material. The cable support pipe may have a circular cross section to facilitate the manoeuvre of the cable support pipe.

The largest cross-sectional dimension of the inspection camera may be less than 2.54 cm (1 inch), whereby it may be possible to use existing tank interfaces and thus, there is no need to provide customized interfaces or openings to the tank interior.

As mentioned above, the inspection camera arrangement comprises a mounting set comprising a flexible sluice and a mounting device, wherein each of the flexible sluice and the mounting device comprises a channel for the inspection camera and at least a portion of the cable and the cable support pipe. The mounting device is configured to be connectable to a tank interface at an upper wall of the tank to be inspected and wherein the channel of the mounting device is configured to be openable and closable. Additionally, the flexible sluice comprises a connecting end, which is configured to be connectable to the mounting device, and a receiving end opposite to the connecting end. Thereby, by means of the mounting set, secure conveyance of the inspection camera can be obtained.

The flexible sluice may comprise a bellow, which renders the sluice flexible. Thus, the flexible sluice may be made of stiff and/or hard materials, such as stainless steel.

The receiving end of the flexible sluice may comprise sealing means for preventing protective gas within the tank from escaping between the sluice and cable support pipe.

The connecting end of the flexible sluice may comprise locking means. In this way it can be securely connected to the mounting device.

The mounting device may comprise an openable and closable valve to prevent exhaust of the protective gas inside the tank to the atmosphere, or contamination of the tank atmosphere with the surrounding air.

Each of the channel of the flexible sluice and the channel of the mounting device may have a minimum cross-sectional dimension of more than or equal to 2.54 cm (1 inch). Thereby, the manoeuvre of the cable support pipe can be facilitated.

The present invention also relates to a cargo tank for a fluid comprising an upper wall, at least one side wall and a lower wall defining a tank volume. The cargo tank comprises the inspection camera arrangement as described above. The upper wall comprises a tank interface configured to be connected to the inspection camera arrangement. The cable support pipe of the inspection camera arrangement is configured to be pushed through the tank interface by a tilting movement and positioned in the tank interface such that the inspection camera device is permitted to be lowered into the tank interior at a transversal distance from a vertical path defined by the tank interface. Thereby, a cargo tank which can be easily remotely inspected by means of an inspection camera is provided.

As mentioned above, the upper wall comprises a tank interface connected to the inspection camera as described above. The cable support pipe of the inspection camera arrangement is positioned such that the inspection camera device is permitted to be lowered into the tank interior at a transversal distance from a vertical path defined by the tank interface.

As mentioned above, the cable support pipe of the inspection camera arrangement is configured to be pushed through the tank interface by a tilting movement, whereby the cable support pipe is inclined. Thus, the cable support pipe may be inclined at insertion of the cable support pipe through the tank interface. In particular, the cable support pipe may be inclined during a portion of the insertion of the cable support pipe through the tank interface. The cable support pipe may be inclined in relation to the vertical path. The tilting movement implies that the cable support pipe is tilted while pushed through the tank interface and typically the tilting, i.e. the degree of tilting, of the cable support pipe is varied while pushing the cable support pipe through the tank interface. The tilting may be varied in order to follow the shape of the cable support pipe, more precisely the shape of the portion of the cable support pipe presently being at the location of the tank interface. The inclination, i.e. the inclination of the cable support pipe, more specifically the inclination of the cable support pipe in relation to the vertical path, may be varied while pushing the cable support pipe through the tank interface. The tilting movement is performed to enable insertion of the cable support pipe through the tank interface. The tilting movement is required due to the shape of the cable support pipe, in particular due to the curved section and/or the section inclined of the first portion of the cable support pipe. By the tilting movement the portion of the cable support pipe passing through the tank interface may in each moment be directed substantially parallel to the vertical path or at least sufficiently parallel to the vertical path in order to enable the cable support pipe to be pushed through the tank interface. The cable support pipe may be configured to be pushed through the tank interface by a combined pushing movement and tilting movement. Thereby, the cable support pipe is tilted as it is pushed through the tank interface. Typically, the tilting, i.e. the degree of tilting, is varied as the cable support pipe is pushed through the tank interface. The tilting may be varied in order to follow the shape of the cable support pipe, more precisely the shape of the portion of the cable support pipe presently being at the tank interface. More precisely, a portion of the cable support pipe may be pushed through the tank interface. For example, the second pipe end of the cable support pipe, possibly including a transversally extending protruding portion and a holding arrangement, should preferably be kept outside the tank interface in order to manoeuvre and retract the cable support pipe.

In other words, the cable support pipe of the inspection camera arrangement may be configured to be inserted through the tank interface by a pushing and tilting movement.

The cable support pipe may be pushed through the tank interface by a sliding movement. This implies that the cable support pipe is slid through the tank interface when pushed through the tank interface. The cable support pipe may be configured to be pushed through the tank interface by a combined sliding movement and tilting movement. Thereby the cable support pipe is tilted as it is slid through the tank interface. Typically, the tilting, i.e. the degree of tilting, is varied as the cable support pipe is slid through the tank interface.

The cargo tank for a fluid may comprise a submerged cargo pump arranged to empty a fluid content of the tank, and at least one intermediate support along the vertical extension of the submerged cargo pump and wherein the submerged cargo pump and/or the at least one intermediate support are located in or in proximity to the vertical path defined by the tank interface. Alternatively, the submerged cargo pump and the at least one intermediate support are located in proximity to the vertical path defined by the tank interface. Thus, also tanks containing submerged cargo pump can be easily remotely inspected by means of the inspection camera arrangement described above.

The cargo tank may be associated with a deck trunk, and the deck trunk comprises the tank interface. Thereby an easy location is provided for the tank interface. Since the deck trunks often readily comprise interfaces for piping to be used in different applications, e.g. in venting, it may be possible to use the existing interfaces for the inspection purpose. This further facilitates and simplifies the inspection of the tank interior.

The cargo tank comprises a mounting set comprising a flexible sluice and a mounting device. Each of the flexible sluice and the mounting device comprises a channel for the inspection camera and at least a portion of the cable and the cable support pipe. The mounting device is configured to be connectable to the tank interface at the upper wall of the cargo tank. The channel of the mounting device is configured to be openable and closable. Thereby, it is prevented that the protective gas inside the tank escapes to the atmosphere. The flexible sluice comprises a connecting end, which is configured to be connectable to the mounting device, and a receiving end opposite to the connecting end.

The present disclosure also relates to a cargo tanker comprising at least one cargo tank for a fluid as described above.

The present invention also relates to a method for inspecting an interior surface of a cargo tank for a fluid by means of an inspection camera arrangement. The cargo tank comprises a submerged cargo pump and optionally at least one intermediate support, and a tank interface. The inspection camera arrangement is configured to be inserted to the tank interior via the tank interface. The inspection camera arrangement further comprising an inspection camera, a cable connected to the inspection camera and a cable support pipe supporting a first cable length. The cable support pipe has an elongated shape and has a first pipe end and a second pipe end. The cable support pipe comprises a first portion and a second portion, wherein the first portion transitions to the second portion at a common transition point. The first portion comprises in a first common plane with the second portion a curved section and/or a section inclined in respect to the second portion. The inspection camera arrangement further comprises a mounting set comprising a flexible sluice and a mounting device. Each of the flexible sluice and the mounting device comprises a channel for the inspection camera and at least a portion of the cable and the cable support pipe. The mounting device is configured to be connectable to the tank interface at an upper wall of the tank. The channel of the mounting device is configured to be openable and closable. The flexible sluice comprises a connecting end, which is configured to be connectable to the mounting device, and a receiving end opposite to the connecting end. The method comprises:
conveying the inspection camera and at least portion of the cable support pipe into the interior of the cargo tank for a fluid and the tank interface by pushing and tilting the cable support pipe through the tank interface;
positioning by means of the cable support pipe the inspection camera at a transversal distance from the submerged cargo pump and/or the optional at least one intermediate support and optionally rotating or turning the cable support pipe such that the transversal distance is reached;
lowering the inspection camera to a desired inspection location by means of the cable of the inspection camera arrangement, the cable being connected to the inspection camera.

As mentioned above, the cable support pipe has an elongated shape and a first pipe end and a second pipe end. The cable support pipe comprises a first portion and a second portion. The first portion transitions to the second portion at a common transition point. The first portion comprises in a first common plane with the second portion a curved section and/or a section inclined in respect to the second portion.

A portion of the cable support pipe is conveyed into the interior of the cargo tank and the tank interface by pushing and tilting the cable support pipe through the tank interface. The method may include the step pushing and tilting the cable support pipe through the tank interface. More precisely, the method may include the step pushing and tilting a portion of the cable support pipe through the tank interface.

The cable support pipe may be inserted through the tank interface by pushing and tilting, e.g. by a pushing and tilting movement. The method may include the step inserting the cable support pipe through the tank interface by pushing and tilting, e.g. by a pushing and tilting movement.

A portion of the cable support pipe may be conveyed into the interior of the cargo tank and the tank interface by sliding, e.g. a sliding movement. A portion of the cable support pipe may be conveyed into the interior of the cargo tank and the tank interface by sliding the cable support pipe through the tank interface. The method may include the step sliding the cable support pipe through the pipe interface. More precisely, the method may include the step sliding a portion of the cable support pipe through the pipe interface.

A portion of the cable support pipe is conveyed into the interior of the cargo tank and the tank interface by pushing and tilting, i.e. a combined pushing and tilting movement. The method may include the step pushing and tilting the cable support pipe through the pipe interface. More precisely, the method may include the step pushing and tilting a portion of the cable support pipe through the pipe interface.

A portion of the cable support pipe may be conveyed into the interior of the cargo tank and the tank interface by sliding and tilting, i.e. a combined sliding and tilting movement. The method may include the step sliding and tilting the cable support pipe through the pipe interface. More precisely, the method may include the step sliding and tilting a portion of the cable support pipe through the pipe interface.

The method may further comprise a step where upon finished visual inspection, raising the inspection camera by pulling the cable and pulling the inspection camera and the cable support pipe out through the tank interface.

Further features and advantages of the present invention are described below in connection with the detailed description.

### BRIEF DESCRIPTION OF THE DRAWINGS

In the detailed description below, reference is made to appended drawings in which:
Fig. 1 schematically illustrates in a side view a cargo tanker comprising two chemical cargo tanks;
Fig. 2 schematically illustrates a partially cut side view of a chemical tank, in which remote visual inspection can be performed;
Fig. 3 shows a deck trunk in a view from above with a vertical cut line for the view in Fig. 4;
Fig. 4a shows a deck trunk in a cut side view according to the vertical cut line of Fig. 3 and a side view of an inspection camera arrangement according to the present invention;
Fig. 4b shows a cable support pipe of the inspection camera arrangement in Fig 4a in an enlarged view;
Fig. 5a-5e show schematically examples of different shapes for a cable support pipe of the inspection camera arrangement according to the present disclosure;
Fig. 6a shows a side view of an inspection camera arrangement according to the present invention in a position where the camera is to be inserted through a tank interface into the tank;
Fig. 6b is an enlarged view of a mounting set of the inspection camera arrangement shown in Fig. 6a;
Fig. 7a shows a side view of the inspection camera arrangement according to the present invention in a position where the camera is inserted through a tank interface into the tank;
Fig. 7b shows a side view of the inspection camera arrangement according to the present invention in a position where the camera is inserted through the tank interface into the tank and located close to an intermediate support;
Fig. 7c shows a side view of the inspection camera arrangement according to the present invention in a position where the camera support pipe is rotated such that the inspection camera does not collide with the intermediate support;
Fig. 7d shows a side view of the inspection camera arrangement according to the present invention in a position where the inspection camera passes by the intermediate support;
Fig. 8 shows a partially cut side view of the chemical tank shown in Fig. 2, in which the inspection camera is lowered to a position in which remote visual inspection of the bottom of the tank can be performed.

### DETAILED DESCRIPTION

The present disclosure aims to facilitate and make inspection of ROB inside a cargo tank faster and simpler, and safer from the working environment safety view. Further, it is an objective to make the inspection more energy saving and more environmentally friendly, since a protective gas atmosphere inside the cargo tank needs not be emptied and refilled for an inspection.

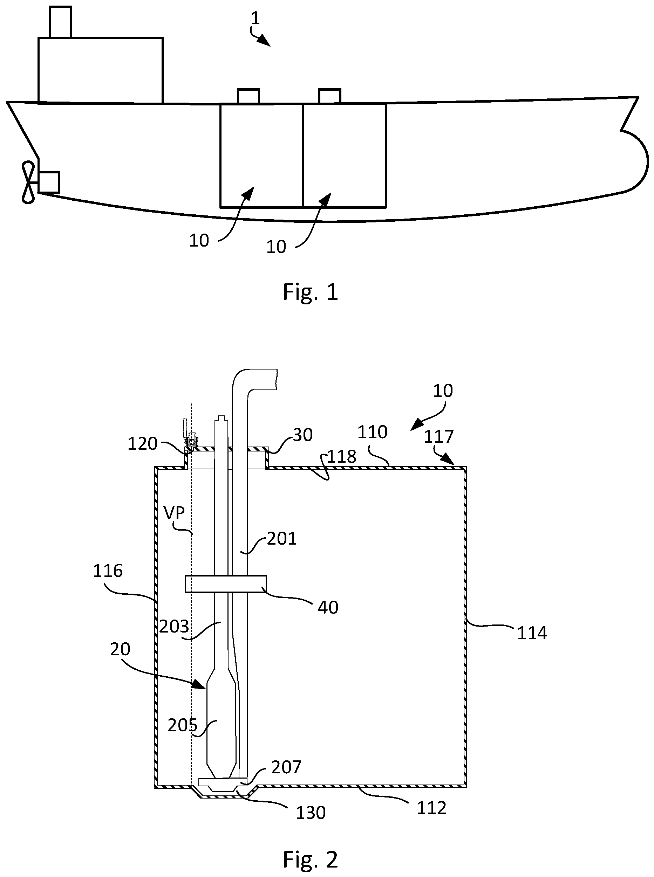

Chemical or product cargo tankers may include several cargo tanks for fluids. Fig. 1 schematically illustrates an example of a cargo tanker 1, which comprises two cargo tanks 10 for fluids. The cargo tanks 10 may be used to transport bulk chemicals, such as industrial chemicals, commodity chemicals, vegetable oils, crude oil or petroleum-based chemicals or products. The cargo tanks may be made of a chemical resistant material and may comprise an outer wall of stainless steel. The inner surface of the tank may be coated, e.g. to provide a surface that can be easily cleaned.

On a deck of the tanker, one or more so called deck trunks may be located. These deck trunks are associated with a respective cargo tank and the purpose of the deck trunks is to provide space for access inside the cargo tanks. The deck trunks may comprise interfaces or connections to loading/removal pipings, pumps, venting arrangements for example, or may provide an inspection access port inside the tank. The deck trunk may have a structure which is raised above the deck surface. The deck trunk may also extend a certain length inside the interior of the cargo tank. The height and the diameter or length and depth dimensions of the deck trunk may vary.

The cargo tanks for fluids may comprise an arrangement for loading and/or removal of the cargo. Submerged cargo pumps may be used for this purpose. By submerged cargo pump is meant a pump arrangement which comprises pipes arranged to be positioned at a level below the surface level of the fluid inside the cargo tank, usually at a bottom of the cargo tank. The piping of the pump may be permanently fixed to the bottom of the cargo tank. The submerged cargo pump may be of a vertical structure . By vertical structure is meant that the pump extends between a top and a bottom of a cargo tank in vertical direction. The submerged cargo pump may comprise a hydraulically driven centrifugal pump. Submerged cargo pumps are available on the market and are provided for example by a company Framo^{®}.

Fig. 2 schematically illustrates a cargo tank 10 for a fluid, which may be included in a cargo tanker 1 shown in Fig. 1. The cargo tank 10 comprises an upper wall 110 and a lower wall 112. The cargo tank may be circular cylindrical, wherein it has one circular side wall, or it may have a quadrilateral cross section and thus comprise four side walls, two of which have been depicted in Fig. 2 as 114 and 116. However, the cargo tank may alternatively have any other suitable cross-sectional shape. The upper wall, lower wall and the side wall(s) define a tank volume. The tank volume may vary greatly and can be up to about 10.000 cubic metres, e.g. from 3.000-4.500 cubic metres. The cargo tank has an outer surface 117 and an interior surface 118. The height of the tanks in vertical direction may also vary greatly and may be up to for example 40 meters, but is not limited thereto.

The upper wall 110 comprises a tank interface 120, which may comprise an opening to the tank interior. The tank interface 120 is suitably configured to permit conveyance of a device, e.g. an inspection camera, into the interior of the tank 10. In the shown example, the tank interface 120 is comprised in a deck trunk 30, which is associated with the upper wall 110 of the tank 10. By having the tank interface comprised in the deck trunk, the tank interface can be easily located for a quick access inside the tank. According to the present disclosure, an inspection camera is arranged to be pushed through the tank interface 120 into the interior or the cargo tank. The tank interface 120 defines a vertical path VP starting from the tank interface and ending at the bottom wall 112 of the cargo tank. By vertical path is meant a path defined by, i.e. starting from, an insertion position, which may be the tank interface 120, to the inspection position at the bottom of the cargo tank in vertical direction. Suitably, the vertical path is a geometrical vertical path of the cargo tank. It may be different from a vertical line of gravity e.g. in case the tanker is inclined.

The cargo tank 10 in the illustrated example of Fig. 2 comprises a submerged cargo pump 20 arranged to empty or remove the chemical content of the tank. Additionally, the submerged cargo pump 20 may be arranged to load the chemical content into the tank. The submerged cargo pump 20 extends in a vertical direction between the upper wall 110 and lower wall 112 of the tank 10. Generally, the submerged cargo pump 20 may comprise a hydraulic drive unit 205 connected to a centrifugal pump unit 207 located at the bottom of the tank. Suitably the centrifugal pump unit 207 is associated with a suction well 130 of the tank 10. The suction well 130 suitably defines the lowermost location in the bottom of the tank, whereby residual liquid chemicals can be collected by means of gravity into the suction well, e.g. after removal of the absolute majority of the chemical contents from the tank. The submerged centrifugal pump unit 207 may comprise for example an impeller to actuate the centrifugal motion of the chemical content. Further the submerged cargo pump may comprise a cargo pipe 201 and a hydraulic return/pressure pipe 203. The pipes 201 and 203 are associated with the deck trunk 30. The submerged cargo pump 20 may extend between the suction well 130 and the deck trunk 30. Since the distance between the upper wall 110 and the lower wall 112 can be large, the submerged cargo pump 20 may comprise at least one intermediate support means 40 along the vertical extension of the submerged cargo pump 20. In this way the pump can be stably held at its position and connected to the deck trunk. The intermediate support means 40 is connected to the side wall 114, 116 of the tank.

The at least one intermediate support may be located in the vertical path defined by the tank interface and/or the submerged cargo pump may be located in close proximity to the vertical path. Therefore, there is a risk that a device inserted through the tank interface will collide with the intermediate support and/or the submerged pump. For this reason, the inspection of the cargo tank has not been possible by inserting a camera through the tank interface and by lowering the camera towards the bottom, since the camera risks to collide with the submerged pump and/or intermediate support. The inspection camera arrangement of the present disclosure provides a solution to this problem, while the camera can be brought into the interior of the tank in a simple way. Furthermore, by the inspection camera arrangement of the present disclosure the risk for contamination of the tank interior can be minimized. Also, the protective gas does not have to be evacuated from the tank to be able to perform the inspection.

The present disclosure thus relates to an inspection camera arrangement for remote visual inspection of the interior of the cargo tank. The inspection camera arrangement comprises an inspection camera, a cable for lowering the inspection camera into the tank interior and connected to the inspection camera, and a cable support pipe adapted to support a certain predetermined, first cable length.

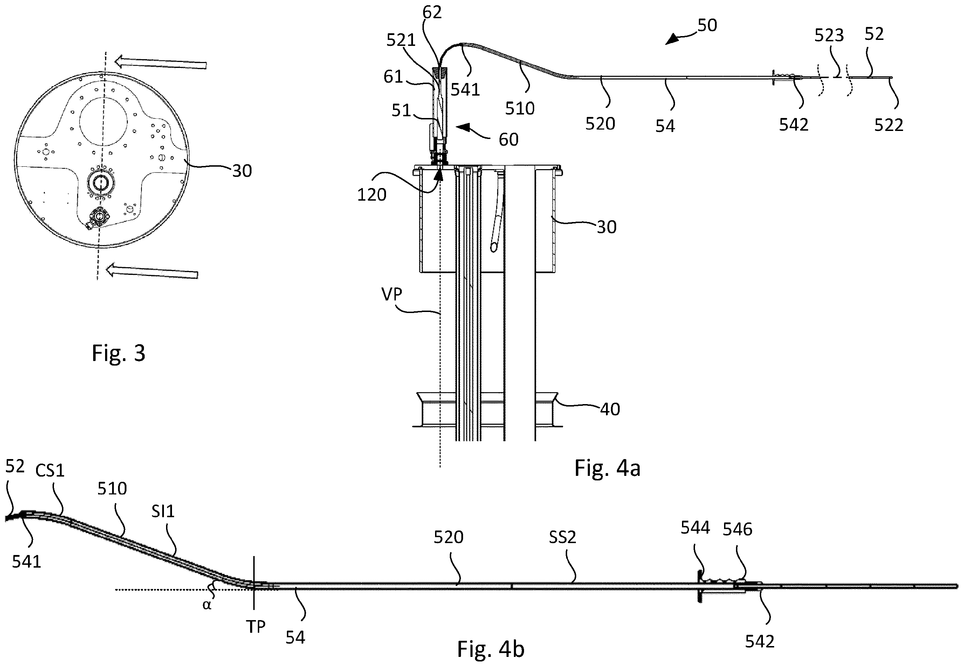

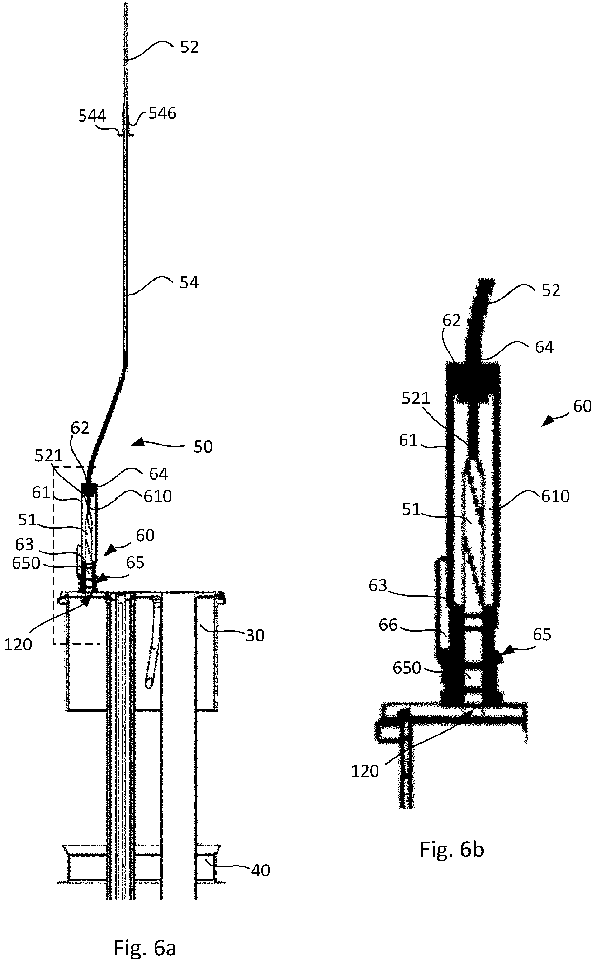

Reference is now made to Fig. 3, which shows a deck trunk 30 in a view from above with a vertical cut line. In Fig. 4a, the deck truck is shown in the cut view from the side and an example embodiment of the inspection camera arrangement 20 in a view, where the inspection camera 51 is inserted to a flexible sluice 61 of a mounting set 60 described more in detail in Fig. 6a and 6b. Fig. 4b shows an enlarged view of the cable support pipe 54.

Fig. 4a shows a cable 52 having a first end 521 is connected to the inspection camera 51. The cable also comprises a second end 522 opposite to the first end 521. The cable 52 has a length which corresponds at least to the vertical extension of a cargo tank, i.e. from the top of the tank to the bottom of the tank, and the portion depicted with 523 illustrates that the length between the cable ends can vary. The inspection camera arrangement 20 further comprises a cable support pipe 54 adapted to support a first cable length positioned between the first end 521 and second end 522 of the cable 52. The length of the cable support pipe may be adapted to the size of the cargo tank, and can vary greatly from e.g. 0.5 to 10 m, but is not limited thereto. Preferably, the cable support pipe 54 is arranged in proximity of the inspection camera, e.g. within a distance from 0-100 cm from the inspection camera.

Generally, the length of the cable support pipe is adapted to the type of the cargo tank to be inspected. The higher the tank, the longer the cable support pipe and thus the first cable length may be. When the tank comprises a submerged cargo pump 20 with at least one intermediate support means 40, the length of the cable support pipe may correspond to a length between an inlet to a mounting set, which will be described more in detail below, connected to a deck trunk 30, and the distance from the deck trunk 30 to the first intermediate support means 40. In this way, the risk for the camera colliding with the intermediate support means is decreased. However, the length of the cable support pipe may be shorter than necessary for extending to the first intermediate support means 40. The cable is glidably arranged within the cable support pipe 54 so that the inspection camera can be lowered by means of the cable to the bottom of the tank. By glidably is meant that the cable can move smoothly and continuously by means of gravity through the cable support pipe.

Fig. 4a and 4b show that the cable support pipe 54 has an elongated shape and has a first pipe end 541 and a second pipe end 542. An inspection camera 51 is connected to a cable 52, which is glidably arranged in the cable support pipe 54. The inspection camera is located in an initial insertion position and associated with a mounting set 60 in a deck truck 30. The inspection camera 51 is arranged to be pushed through a tank interface 120 into the interior or the cargo tank. The tank interface 120 defines a vertical path VP. It can be seen that an intermediate support 40 of a submerged cargo pump is located in the vertical path VP.

The cable support pipe may have a circular, oval, quadrilateral or polygonal cross-section. Preferably the cross-section is circular, whereby easy handling of the cable support pipe during insertion of the inspection camera to the interior of the tank can be obtained. Preferably, the cable has a circular cross-section, which in particular is advantageous when also the cable support pipe has a circular cross-section, but also other cross-sections may be suitable, such as oval, quadrilateral and polygonal. The cable support pipe has a thickness, which corresponds to the largest cross-sectional dimension of the cable support pipe. The length of the cable support pipe is substantially larger than a thickness and/or outer diameter of the cable support pipe. The cable support pipe is configured to house the first cable length and the cable is glidably supported in the cable support pipe. Therefore, an inner cross-sectional dimension or diameter of the cable support pipe is suitably larger than an outer cross-sectional dimension or diameter of the cable. However, the largest cross-sectional diameter of the cable support pipe is preferably less than 1 inch or 2.54 cm, so that it can be fitted to a mounting set having standard openings described more in detail below. However, the cable support pipe may comprise transversally protruding portion and a handle, which are arranged to be located outside the tank interior and they may have a larger cross-sectional dimension than the portions to be inserted through the mounting set and the tank interface. The cable support pipe may though have a smaller cross-sectional dimension than the inspection camera, i.e. than the head of the inspection camera, since the cable may be permanently arranged in the cable support pipe and/or the second end of the cable may have a smaller outer cross-sectional dimension than the inner cross-sectional dimension of the cable support pipe. The cable support pipe may be manufactured of a chemical resistant material, which may be for example a plastic material, metal or combinations thereof.

Further, the cable support pipe 54 comprises a first portion 510 and a second portion 520. The first portion 510 and the second portion 520 constitute a uniform pipe construction in which the first portion 510 transitions to the second portion 520, and vice versa, at a common transition point TP. Generally, the first portion is suitably located closest to the inspection camera. The first portion comprises a curved section CS1 and/or a section inclined SI1 in respect to the second portion.

Generally, the transition point may correspond to a point where the first point of a curved section and/or inclination in respect of the second portion is initiated. By arranging the first portion with a curved section CS1 and/or a section inclined SI1 in respect to the second portion, the inspection camera arrangement can be positioned at a lateral distance from the submerged cargo pump and the optional at least one intermediate support. Thus, the inspection camera device is permitted to be lowered into the tank interior without the risk for colliding with the submerged cargo pump and the optional at least one intermediate support, and simplified inspection of a cargo tank interior can be provided.

Reference is made again to Fig. 4b, which best shows that the second pipe end 542 is associated with a transversally extending protruding portion 544. The protruding portion 544 has a larger cross-sectional extension than the cable support pipe 54 between the first pipe end 541 and the protruding portion 544, and may be configured to be larger than openings in a mounting set and/or tank interface. In this way, the protruding portion 544 may function as a stop-element so that the cable support pipe will not accidentally glide to the interior of the cargo tank. Preferably, the second pipe end 542 is configured to be kept outside the interior of the tank. By keeping the second end outside the tank, the cable support pipe can be controlled and inserted into the tank and retracted from the tank in a controlled manner. Additionally the transversally extending protruding portion may be associated with a holding arrangement, which may improve ergonomic handling of the inspection camera arrangement. The second pipe end 542 may also comprise a sealing 62 for preventing escape of protective gas between the cable support pipe 54 and cable 52.

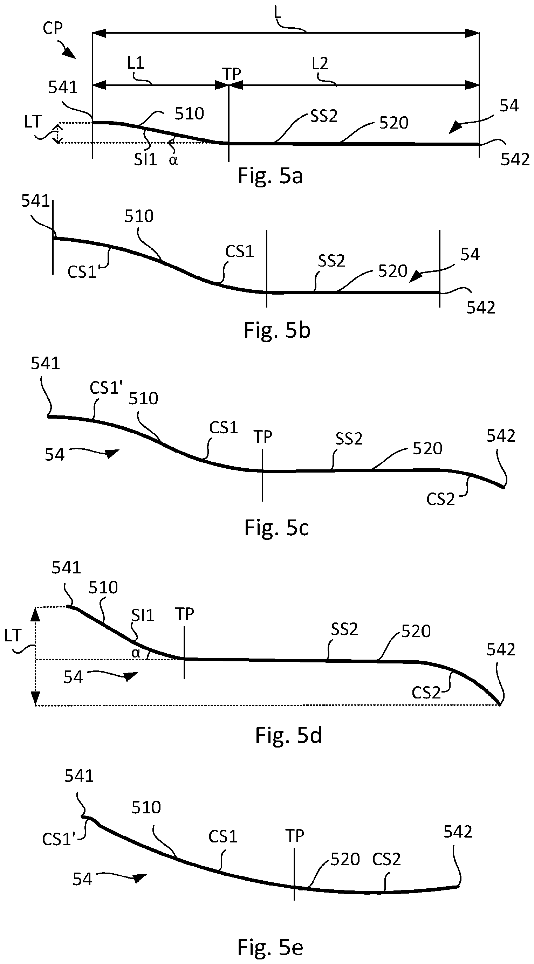

Reference is made to Fig. 5a-5e, in which examples of different shapes for the cable support pipe 54 are illustrated.

In Fig. 5a the shape of the cable support pipe 54 shown in Fig. 4a and 4b is further described. The first portion 510 of the cable support pipe 54 comprises a section inclined (SI1) at an angle α of about 10° in respect of the second portion 520 in a first common plane. The angle of inclination may vary, e.g. depending on the length of the cable support pipe and can be for example from 5-45° in respect of the second portion in a first common plane. The second portion 520 comprises a substantially straight portion SS2. The first portion 510 transitions to the second portion 520 at a common transition point TP.

Generally, the cable support pipe has a certain length and a longitudinal extension, by which is meant a projected length of the cable support pipe, starting from the second end of the cable support pipe and continuing to the first end of the cable support pipe. The longitudinal extension corresponds to the projected extension of the cable support pipe in the direction of elongation of the cable support pipe. As shown in Fig. 5a, the longitudinal extension L is a projection of the cable support pipe and is parallel to a horizontal direction, since the cable support pipe is held horizontally. Analogously, if the cable support pipe were held vertically, the projection, and the longitudinal extension thereof, would be in vertical direction. Thus, the actual length of the cable support pipe may be longer than the longitudinal extension. The longitudinal extension is however important when the cable support pipe is dimensioned, since the longitudinal extension is preferably adapted to the cargo tank and e.g. to the position of e.g. the intermediate support 40, shown in Fig. 4a.

It can be seen from Fig. 5a that the first portion 510 of the cable support pipe 54 has a longitudinal extension L1 and the second portion 520 has a longitudinal extension L2. The total longitudinal extension is a sum of the longitudinal extensions of the different portions between the first and second ends 541, 542 of the cable support pipe 54. The longitudinal extension L is illustrated only in connection with Fig. 5a, but applies analogously for all embodiments.

By the first common plane CP is meant a plane, in which a lateral extension LT, also referred to as transversal extension, of the cable support pipe is largest. By the lateral extension LT is meant lateral projected extension in a direction perpendicular to the longitudinal extension L. The lateral extension LT corresponds thus to a projected extension between two points of the cable support pipe, which have the longest distance, i.e. in the direction of the lateral extension. Suitably, the first cable support pipe end 541 and the second cable support pipe end 542 are laterally offset from each other in the first common plane CP. The first and second cable support pipe ends may define the lateral extension, LT. The cable support pipe may have an arch-shape, and the lateral extension LT corresponds thus to a projected extension between a peripheral point on the arc and an end of the cable support pipe, i.e. between the points having the longest distance.

In the illustrated example of Fig. 5a the points in between which the distance is longest in the direction of the lateral extension LT in the first common plane CP is the transition point TP and a point of the first pipe end 541. The first common plane CP is only shown in connection with Fig. 5a, but applies analogously for Fig. 5b-5e.

In Fig. 5b a cable support pipe shape is shown, in which the first portion 510 comprises a curved section CS1 through which the first portion 510 transitions to the second portion 520. The first portion 510 of the cable support pipe comprises an additional curved section CS1', and forms a shape resembling a shape of half a wave in a sinus curve and is without sharp edges or curves. Thus, smoother insertion of the cable support pipe inside the tank interior maybe obtained. The second portion 520 is substantially straight, i.e. the second portion comprises a straight section SS2, which is substantially parallel to the longitudinal extension L of the cable support pipe.

The shape of the cable support pipe 54 shown in Fig. 5c includes a first portion 510 with the same shape as the first portion in Fig. 5b, but the second portion 520 comprises in addition to the straight section SS2 a curved section CS2 towards the second end 542 of the cable support pipe. By including an additional curved section CS2, which is curved in a direction opposite to the curved section of the first portion 510 at the transition point TP, a longer lateral extension LT is provided than in connection with Fig. 1. The lateral extension LT is illustrated in connection with Fig. 5d, in which a further example of the shape for the cable support pipe 54 is shown.

In the Fig. 5d the first portion 510 comprises a section inclined SI1 at an angle α of about 30° in respect of the second portion 520 in the first common plane, i.e. the plane in which the cable support pipe 54 is shown in Fig. 5d. The second portion 520 comprises a straight section SS2 and the first portion 510 transitions to the second portion 520 at a common transition point TP between the section inclined SI1 and the straight section SS2. The second portion 520 additionally comprises a curved section CS2 towards the second end 542, whereby the lateral extension LT is larger in connection with the embodiment of Fig. 5d than in connection with the lateral extension of the embodiment of Fig. 5a.

Fig. 5e illustrates a further example for the shape of the cable support pipe 54. The first portion 510 comprises a curved section CS1, which transitions to the second portion 520. In the shown example, also the second portion 520 comprises a curved section CS2, which transitions to the curved section CS1 of the first portion 510 at the common transition point TP. Thus, a substantially arch-shaped cable support pipe is provided. The first portion comprises additionally a second curved section CS1' associated with the first end 541 of the cable support pipe. The second curved section CS1' is shorter and curved in an opposite direction compared to the curved section CS1 of the first portion 510 associated with the transition point TP. In this way, insertion of the cable support pipe inside the cargo tank may be facilitated.

The first portion 510 and the second portion 520 of the cable support pipe 54 has a smooth transition, i.e. without sharp bends. The transition between the portions and/or the shapes of the cables support pipe 54 is smooth, i.e. without sharp bends. For example, a transition between the curved section CS1 of the first portion 510 and the substantially straight portion SS2 of the second portion 520 is smooth. Also, a transition between the curved section CS1 of the first portion 510 and the second curved section CS1' of the first portion 510 is smooth. Further, a transition between the substantially straight portion SS2 of the second portion 520 and the curved section CS2 of the second portion 520 is smooth. Also, a transition between the section inclined SI1 of the first portion 510 and the substantially straight portion SS2 of the second portion 520 is smooth. Further, a transition between the curved section CS1 of the first portion 510 and the curved section CS2 of the second portion 520 is smooth.

Overall, also the complete cable support pipe has a smooth shape, i.e. a shape without sharp bends, at least at a majority of the length of the cable support pipe, i.e. a length extending from a location close to the first end 541 of the cable support pipe 54 to a location close to the second end 542 of the cable support pipe 54. A radius of at least 200 mm is considered to obtain a smooth transition. A smooth transition may thus be a bend having a radius of at least 200 mm. The cable support pipe has a shape with bends having a radius of at least 200 mm. Preferably, the radius is at least 300 mm. More preferred, the radius is at least 400 mm. Typically, the radius is at least 650 mm. Typically, the radius of the bend of the cable support pipe having the smallest radius is about 650 mm.

Reference is now made to Fig. 6a, in which the cable support pipe 54 of the inspection camera arrangement 50 shown in Fig. 4a, is lifted from a horizontal position to a vertical position to initiate insertion of the inspection camera 51 into the cargo tank interior. The inspection camera arrangement 50 further comprises a mounting set 60, which comprises a flexible sluice 61 and a mounting device 65. By "flexible sluice" is meant a sluice device which is pliant and able to turn or flex along the extension of the sluice device. The flexible sluice 61 comprises a channel 610 having dimensions adapted to permit conveyance of the inspection camera and at least a portion of the cable and a portion of the cable support pipe into the interior of the tank, and may be for example slightly conical. Preferably, the channel 610 has an inner cross-sectional dimension that is larger than an outer cross-sectional dimension of the inspection camera 51 and thus the cable support pipe and cable, which both have a smaller outer cross-sectional dimension than the camera. The inner cross-sectional dimension of the channel 610 can be for example 0.1-3 times larger than the outer cross-sectional dimension of the inspection camera 51. Also, the flexible sluice may be longer than the inspection camera 51, for example 0.1 to 3 times longer. In this way, the flexible sluice is dimensioned such that the cable support pipe can be turned or rotated to steer or manoeuvre the insertion of the inspection camera device into the tank.

To provide flexible and pliant sluice, the flexible sluice may comprise a bellow, which can be bent in different directions. The flexible sluice is also made of chemical resistant material, and may comprise or consist of stainless steel.

The flexible sluice 61 comprises a connecting end 63, which is configured to be connectable to a mounting device 65. The flexible sluice 61 comprises a receiving end 64, opposite to the connecting end 63. The receiving end 64 comprises a sealing 62 for preventing escape of protective gas between the cable support pipe 54 and cable 52. The sealing is preferably flexible, and can be a membrane-type sealing. This allows for the inspection camera 51 to be inserted through the sealing without a need to remove the sealing before insertion and placing it back after insertion. Additionally, the sealing is configured to allow the cable to glide through.

The mounting set 60 further comprises a mounting device 65, which also comprises a channel 650 having dimensions adapted to permit conveyance of the inspection camera 51 and at least a portion of the cable 52 and a portion of the cable support pipe 54 into the interior of the tank. The connecting end 63 of the flexible sluice 61 may comprise locking means (not shown), which may secure the flexible sluice 61 to the mounting device 65. Such locking means may be of any conventional type of coupling means, such as a quick coupling or threads.

The mounting device is configured to be connectable to a tank interface 120 at an upper wall 110 of the tank 10 (see Fig. 2) to be inspected. The channel 650 of the mounting device may have a substantially same dimension as the tank interface. The channel 650 of the mounting device is configured to be openable and closable, for example by means of valve device 66. The valve device 66 in Fig. 6b is in an open position. Thus, the flexible sluice 61 may be first connected to the mounting device 65 when the mounting device 65 is in a closed position. Therefore, the risk for the protective gas escaping from the cargo tank is reduced. When the inspection camera is to be inserted into the interior of the cargo tank, the mounting device 65 can be arranged in its open position, e.g. by opening the valve device 66.

The tank interface 120 may be a specific interface configured to receive the inspection camera 51. However, according to a variant the tank interface 120 is an existing interface, which may be used for other purposes as well, for example for venting or removing exhaust air from the tank. The existing interface openings usually have a diameter or 1 inch (2.54 cm). Therefore, the largest cross-sectional extension of the inspection camera may be less than 2.54 cm (1 inch), whereby the existing interfaces may be used for the inspection purpose. Consequently, also the cable and the cable support pipe may have a largest cross-sectional extension of less than 2.54 cm (1 inch). The inspection camera is a device, which comprises a camera and lighting arrangement, and is preferably of a low voltage type. The camera and the lighting arrangement may of any suitable type, and can be chosen by the skilled person. Therefore, the inspection camera as such is not described in detail in the present disclosure.

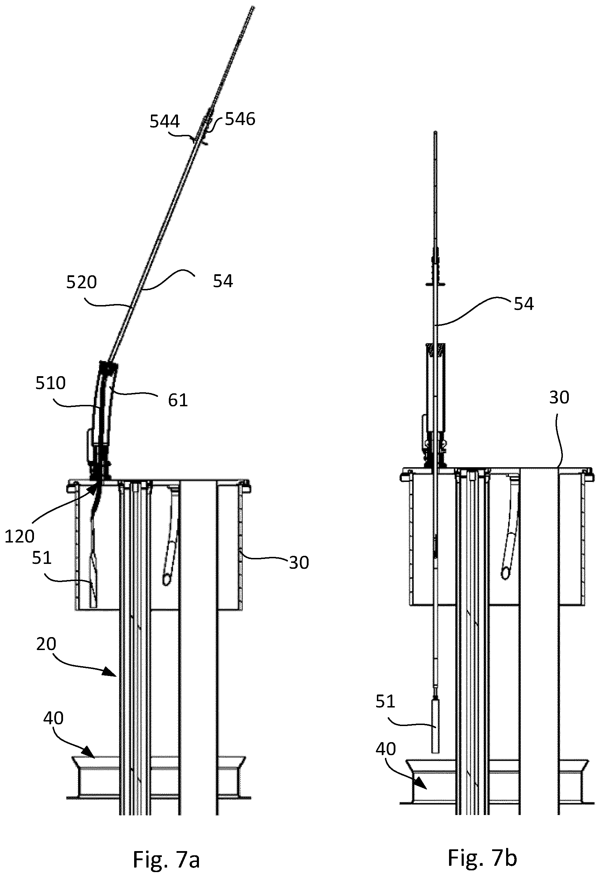

The present disclosure also relates to a method for inspecting an interior surface 118 of a chemical cargo tank 10 comprising a submerged cargo pump 20 and optionally at least one intermediate support 40, and reference is made to Fig. 4a, 6a and 7a-7d and Fig. 8. In Fig. 7a-7d only reference signs discussed below are shown for clarity reasons, but the same details as shown in the previous drawings apply. The chemical cargo tank 10 also comprises a tank interface 120 configured to be connected to a mounting set 60 of an inspection camera arrangement 50, the inspection camera arrangement further comprising an inspection camera 51, a cable 52 connected to the inspection camera 51 and a cable support pipe 54 supporting a first cable length. The inspection camera arrangement 50, may be of the type described above. The method comprises in a first step conveying the inspection camera 51 and at least portion of the cable support pipe 54 into the interior of the chemical cargo tank 10 through the mounting set 60 and the tank interface 120. The first step may be performed as shown in the appended drawings. Fig. 4a shows that the inspection camera 51 is firstly inserted inside the flexible sluice 61. In Figure 6a it is shown that the cable support pipe is turned into a vertical position to initiated insertion of the inspection camera 51 firstly into an interior of the deck trunk 30. In Fig. 7a the next step is shown in which the inspection camera has been pushed through the tank interface 120. Since the first portion 510 of the cable support pipe 54 comprises a section SI inclined in respect of the second portion 520 of the cable support pipe 54, the cable support pipe 54 needs to be turned to incline in a corresponding angle, so that it can be pushed through the tank interface 120. As shown in Fig. 7a, the flexible sluice bends, whereby it is possible to turn the cable support pipe 54 without a risk for breaking or bending of the cable support pipe 54.

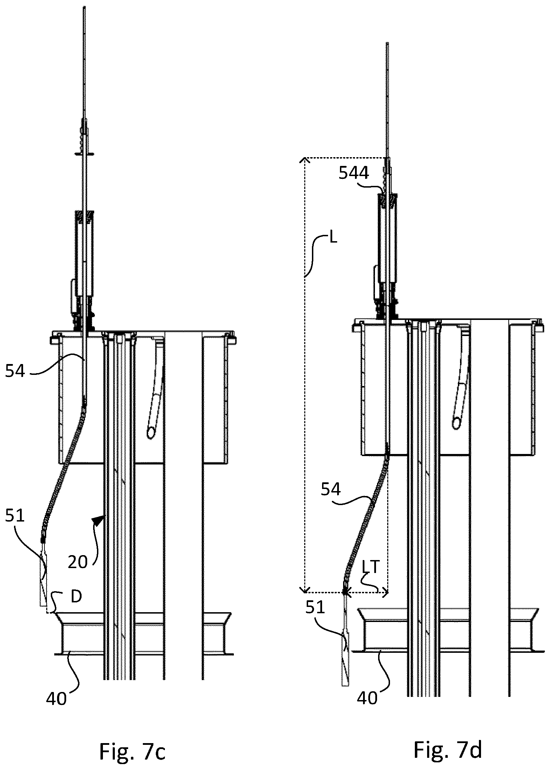

In the next step the inspection camera is positioned by means of the cable support pipe 54 at a transversal distance from the submerged cargo pump 20 and the optional at least one intermediate support 40. The cable support pipe may be optionally rotated or turned such that the transversal distance is reached. Fig. 7b shows that the cable support pipe 54 is rotated around a vertical axis and pressed downwards. The inspection camera 51 is thus lowered towards the intermediate support means 40. Fig. 7c shows that the cable support pipe 54 is rotated and it can be checked that the camera is located at a transversal or lateral distance D from the intermediate support means 40, so that there is no risk for colliding with the intermediate support. When it is assured that there is no risk for collision, the inspection camera can be pushed further towards the lower wall 112 (see Fig. 2) of the cargo tank 10 as shown in Fig. 7d. This can be performed so that the cable support pipe 54 is firstly pushed to its end position, i.e. until the transversally extending protruding portion 544 stops further pushing of the cable support pipe 54. In this position, the cable support pipe 54 obtains its maximal longitudinal extension L as shown in Fig. 7d. When this position is reached, the next step of the method is initiated in which the inspection camera is lowered to a desired inspection location by means of the cable 52 of the inspection camera arrangement 50, the cable being connected to the inspection camera. Since the cable 52 is glidably arranged in the cable support pipe 54, the inspection camera 51 may be lowered towards the bottom of the tank by means of gravity.

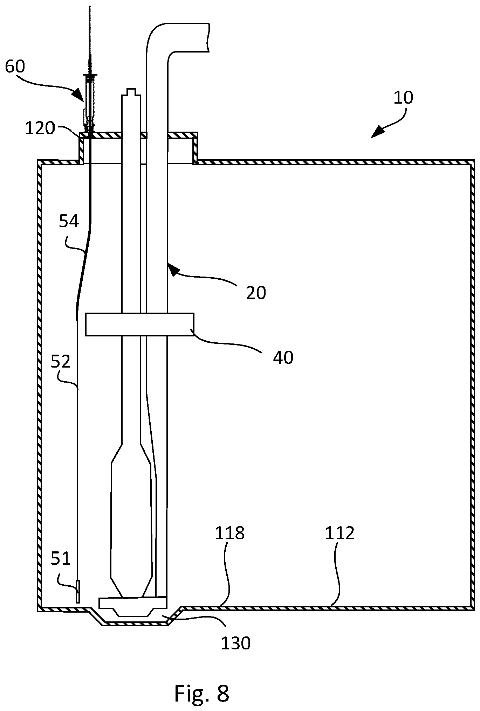

Fig. 8 shows the inspection camera 51 in the desired inspection location in proximity of the suction well 130 and the lower wall 112 of the cargo tank to inspect the interior surface 118 of the cargo tank 10. The cable support pipe 54 is inserted through the mounting set 60 and the tank interface 120 into the interior of the cargo tank 10. The cable support pipe guides the cable 52 and the camera device 51 such that they do not collide with the submerged cargo pump 20 and the intermediate support 40 thereof. Thus, remote visual inspection of the interior of the tank can be performed, and a simple way of inspecting e.g. if removal of the cargo tank content is complete, is provided. The method may further comprise a step of upon finished visual inspection, raising the inspection camera by pulling the cable and pulling the inspection camera out. In the shown example, the camera is pulled out through the mounting set 60.

The features described above in the detailed description can be combined within the scope defined in the appended claims.

## Claims

1. Inspection camera arrangement (50) for remote visual inspection of an interior of a cargo tank (10) for a fluid, comprising:
an inspection camera (51);
a cable (52) having a first end (521) connected to the inspection camera (51) and a second end (522) opposite to the first end (521);
a cable support pipe (54) adapted to support a first cable length positioned between the first end and second end (521; 522) of the cable (52), the cable (52) being glidably arranged within the cable support pipe (54), wherein:
the cable support pipe (54) has an elongated shape and has a first pipe end (541) and a second pipe end (542), and
the cable support pipe (54) comprises a first portion (510) and a second portion (520), wherein the first portion (510) transitions to the second portion (520) at a common transition point (TP), and wherein the first portion (510) comprises in a first common plane (CP) with the second portion (520):
a curved section (CS1) and/or
a section inclined (SI1) in respect to the second portion (520),
wherein the inspection camera arrangement (50) further comprises a mounting set (60) comprising a flexible sluice (61) and a mounting device (65), wherein each of the flexible sluice and the mounting device comprises a channel (610; 650) for the inspection camera (51) and at least a portion of the cable (52) and the cable support pipe (54), and wherein
the mounting device (65) is configured to be connectable to a tank interface (120) at an upper wall (110) of the tank (10) and wherein the channel (650) of the mounting device (65) is configured to be openable and closable, and
the flexible sluice (61) comprises a connecting end (63), which is configured to be connectable to the mounting device (65), and a receiving end (64) opposite to the connecting end (63).

2. Inspection camera arrangement of claim 1, wherein the first pipe end (541) and the second pipe end (542) are laterally offset from each other in the first common plane (CP).

3. Inspection camera arrangement of claim 1 or 2, wherein the first portion (510) comprises a section inclined (SI1) at an angle of from 5-45° in respect of the second portion (520) in the first common plane (CP).

4. Inspection camera arrangement of any one of claims 1 to 3, wherein the second portion (520) comprises:
a substantially straight section (SS2), which is substantially parallel to a longitudinal extension (L) of the cable support pipe (54), and/or
a curved section (CS2).

5. Inspection camera arrangement of any one of claims 1 to 4, wherein the first portion (510) comprises a curved section (CS1), which transitions to a curved section (CS2) of the second portion at the common transition point (TP), and wherein the cable support pipe (54) is substantially arch-shaped.

6. Inspection camera arrangement (50) of any one of the preceding claims, wherein the second pipe end (542) is configured to be kept outside the interior of the tank (10) and is associated with a transversally extending protruding portion (544), which is optionally associated with a holding arrangement (546).

7. Inspection camera arrangement (50) of any one of the preceding claims, wherein the largest cross-sectional dimension of the inspection camera is less than 2.54 cm (1 inch).

8. Inspection camera arrangement according to any one of the preceding claims, wherein the flexible sluice (61) comprises a bellow.

9. Inspection camera arrangement according to any one of the preceding claims, wherein the receiving end (64) of the flexible sluice (61) comprises sealing means (62) for preventing protective gas within the tank (10) from escaping between the sluice (61) and cable support pipe (54).

10. Inspection camera arrangement according to any one of the preceding claims, wherein the connecting end (63) of the flexible sluice comprises locking means.

11. Inspection camera arrangement according to any one of the preceding claims, wherein the mounting device comprises an openable and closable valve.

12. Inspection camera arrangement according to any one of the preceding claims, wherein the channel (610) of the flexible sluice (61) and the channel (650) of the mounting device (65) each has a minimum cross-sectional dimension of more than or equal to 2.54 cm (1 inch).

13. Cargo tank (10) for a fluid comprising an upper wall (110), at least one side wall (114; 116) and a lower wall (112) defining a tank volume, wherein the cargo tank (10) comprises the inspection camera arrangement (50) according to any one of the preceding claims 1-12, wherein the upper wall (110) comprises a tank interface (120) configured to be connected to the inspection camera arrangement (50), and wherein the cable support pipe (54) of the inspection camera arrangement (50) is configured to be pushed through the tank interface (120) by a tilting movement and positioned in the tank interface (120) such that the inspection camera (51) is permitted to be lowered into the tank interior at a transversal distance from a vertical path defined by the tank interface (120).

14. Cargo tank (10) for a fluid according to claim 13, wherein the cargo tank (10) comprises a submerged cargo pump (20) arranged to empty a fluid content of the tank, and at least one intermediate support (40) along the vertical extension of the submerged cargo pump and wherein the submerged cargo pump (20) and/or the at least one intermediate support (40) are located in or in proximity to the vertical path defined by the tank interface.

15. Cargo tank (10) for a fluid according to any one of claims 13 to 14, wherein the tank (10) is associated with a deck trunk (30), and wherein the deck trunk comprises the tank interface (120).

16. Method for inspecting an interior surface (118) of a cargo tank (10) for a fluid by means of an inspection camera arrangement (50), the cargo tank (10) comprising a submerged cargo pump (20) and optionally at least one intermediate support (40) and a tank interface (120) , wherein the inspection camera arrangement (50) is configured to be inserted to the tank interior via the tank interface (120), the inspection camera arrangement further comprising an inspection camera (51), a cable (52) connected to the inspection camera (51) and a cable support pipe (54) supporting a first cable length, wherein the cable support pipe (54) has an elongated shape and has a first pipe end (541) and a second pipe end (542), and the cable support pipe (54) comprises a first portion (510) and a second portion (520), wherein the first portion (510) transitions to the second portion (520) at a common transition point (TP), and wherein the first portion (510) comprises in a first common plane (CP) with the second portion (520) a curved section (CS1) and/or a section inclined (SI1) in respect to the second portion (520), the inspection camera arrangement (50) further comprising a mounting set (60) comprising a flexible sluice (61) and a mounting device (65), wherein each of the flexible sluice and the mounting device comprises a channel (610; 650) for the inspection camera (51) and at least a portion of the cable (52) and the cable support pipe (54), and wherein the mounting device (65) is configured to be connectable to the tank interface (120) at an upper wall (110) of the tank (10) and wherein the channel (650) of the mounting device (65) is configured to be openable and closable, and wherein the flexible sluice (61) comprises a connecting end (63), which is configured to be connectable to the mounting device (65), and a receiving end (64) opposite to the connecting end (63), the method comprising:
conveying the inspection camera (51) and at least a portion of the cable support pipe (54) into the interior of the cargo tank (10) for a fluid and the tank interface (120) by pushing and tilting the cable support pipe (54) through the tank interface (120);
positioning by means of the cable support pipe (54) the inspection camera (51) at a transversal distance from the submerged cargo pump (20) and/or the optional at least one intermediate support (40) and optionally rotating or turning the cable support pipe (54) such that the transversal distance is reached;
lowering the inspection camera (51) to a desired inspection location by means of the cable (52) of the inspection camera arrangement (50), the cable (52) being connected to the inspection camera (51).

17. Method according to claim 16, the method further comprising:
upon finished visual inspection, raising the inspection camera (51) by pulling the cable (52),
pulling the inspection camera (51) and the cable support pipe (54) out through the tank interface (120).

## Patentansprüche

1. Inspektionskameraanordnung (50) zur visuellen Ferninspektion eines Inneren eines Ladetanks (10) für ein Fluid, die Folgendes umfasst:
eine Inspektionskamera (51);
ein Kabel (52) mit einem an die Inspektionskamera (51) angeschlossenen ersten Ende (521) und einem zweiten Ende (522) gegenüber dem ersten Ende (521);
ein Kabelhalteohr (54), das zum Halten einer zwischen dem ersten Ende und dem zweiten Ende (521; 522) des Kabels (52) positionierten ersten Kabellänge ausgelegt ist, wobei das Kabel (52) gleitend in dem Kabelhalterohr (54) angeordnet ist, wobei:
das Kabelhalterohr (54) eine längliche Form aufweist und ein erstes Rohrende (541) und ein zweites Rohrende (542) aufweist, und
das Kabelhalterohr (54) einen ersten Abschnitt (510) und einen zweiten Abschnitt (520) umfasst, wobei der erste Abschnitt (510) an einem gemeinsamen Übergangspunkt (TP) in den zweiten Abschnitt (520) übergeht, und wobei der erste Abschnitt (510) in einer ersten gemeinsamen Ebene (CP) mit dem zweiten Abschnitt (520) Folgendes umfasst:
eine gekrümmte Sektion (CS1) und/oder
eine in Bezug auf den zweiten Abschnitt (520) geneigte Sektion (SI1),
wobei die Inspektionskameraanordnung (50) ferner einen Montagesatz (60) umfasst, der eine flexible Schleuse (61) und eine Montagevorrichtung (65) umfasst, wobei die flexible Schleuse und die Montagevorrichtung jeweils einen Kanal (610; 650) für die Inspektionskamera (51) und mindestens einen Abschnitt des Kabels (52) und des Kabelhalterohrs (54) umfasst, und wobei
die Montagevorrichtung (65) zum Anschließen an eine Tankschnittstelle (120) an einer oberen Wand (110) des Tanks (10) konfiguriert ist, und wobei der Kanal (650) der Montagevorrichtung (65) so konfiguriert ist, dass er geöffnet und geschlossen werden kann, und
die flexible Schleuse (61) ein Anschlussende (63), das so konfiguriert ist, dass es an die Montagevorrichtung (65) angeschlossen werden kann, und ein Aufnahmeende (64) gegenüber dem Anschlussende (63) umfasst.

2. Inspektionskameraanordnung nach Anspruch 1, wobei das erste Rohrende (541) und das zweite Rohrende (542) in der ersten gemeinsamen Ebene (CP) lateral zueinander versetzt sind.

3. Inspektionskameraanordnung nach Anspruch 1 oder 2, wobei der erste Abschnitt (510) eine in Bezug auf den zweiten Abschnitt (520) in der ersten gemeinsamen Ebene (CP) um einen Winkel von 5-45° geneigte Sektion (SI1) umfasst.

4. Inspektionskameraanordnung nach einem der Ansprüche 1 bis 3, wobei der zweite Abschnitt (520) Folgendes umfasst:
eine im Wesentlichen gerade Sektion (SS2), die im Wesentlichen parallel zu einer Längserstreckung (L) des Kabelhalterohrs (54) verläuft, und/oder
eine gekrümmte Sektion (CS2).

5. Inspektionskameraanordnung nach einem der Ansprüche 1 bis 4, wobei der erste Abschnitt (510) eine gekrümmte Sektion (CS1) umfasst, die am gemeinsamen Übergangspunkt (TP) in eine gekrümmte Sektion (CS2) des zweiten Abschnitts übergeht, und wobei das Kabelhalterohr (54) im Wesentlichen bogenförmig ist.

6. Inspektionskameraanordnung (50) nach einem der vorhergehenden Ansprüche, wobei das zweite Rohrende (542) so konfiguriert ist, dass es außerhalb des Inneren des Tanks (10) gehalten wird und mit einem sich quer erstreckenden, vorstehenden Abschnitt (544) assoziiert ist, der optional mit einer Halteanordnung (546) assoziiert ist.

7. Inspektionskameraanordnung (50) nach einem der vorhergehenden Ansprüche, wobei die größte Querschnittsabmessung der Inspektionskamera kleiner als 2,54 cm (1 Zoll) ist.

8. Inspektionskameraanordnung nach einem der vorhergehenden Ansprüche, wobei die flexible Schleuse (61) einen Faltenbalg umfasst.

9. Inspektionskameraanordnung nach einem der vorhergehenden Ansprüche, wobei das Aufnahmeende (64) der flexiblen Schleuse (61) ein Dichtungsmittel (62) umfasst, um zu verhindern, dass Schutzgas innerhalb des Tanks (10) zwischen der Schleuse (61) und dem Kabelhalterohr (54) entweicht.

10. Inspektionskameraanordnung nach einem der vorhergehenden Ansprüche, wobei das Anschlussende (63) der flexiblen Schleuse ein Verriegelungsmittel umfasst.

11. Inspektionskameraanordnung nach einem der vorhergehenden Ansprüche, wobei die Montagevorrichtung ein öffenbares und schließbares Ventil umfasst.

12. Inspektionskameraanordnung nach einem der vorhergehenden Ansprüche, wobei der Kanal (610) der flexiblen Schleuse (61) und der Kanal (650) der Montagevorrichtung (65) jeweils eine Mindestquerschnittsabmessung von gleich oder größer 2,54 cm (1 Zoll) aufweisen.

13. Ladetank (10) für ein Fluid, der eine obere Wand (110), mindestens eine Seitenwand (114; 116) und eine untere Wand (112) umfasst, die ein Tankvolumen definieren, wobei der Ladetank (10) die Inspektionskameraanordnung (50) nach einem der vorhergehenden Ansprüche 1-12 umfasst, wobei die obere Wand (110) eine Tankschnittstelle (120) umfasst, die zum Anschließen an die Inspektionskameraanordnung (50) konfiguriert ist, und wobei das Kabelhalterohr (54) der Inspektionskameraanordnung (50) so konfiguriert ist, dass es durch eine Kippbewegung durch die Tankschnittstelle (120) geschoben und in der Tankschnittstelle (120) so positioniert wird, dass die Inspektionskamera (51) in einem Querabstand zu einem durch die Tankschnittstelle (120) definierten vertikalen Weg in das Tankinnere abgesenkt werden kann.

14. Ladetank (10) für ein Fluid nach Anspruch 13, wobei der Ladetank (10) eine zum Entleeren eines Fluidinhalts des Tanks angeordnete eingetauchte Ladepumpe (20) und mindestens eine Zwischenhalterung (40) entlang der vertikalen Erstreckung der eingetauchten Ladepumpe umfasst, und wobei sich die eingetauchte Ladepumpe (20) und/oder die mindestens eine Zwischenhalterung (40) in oder nahe dem durch die Tankschnittstelle definierten vertikalen Weg befinden.

15. Ladetank (10) für ein Fluid nach einem der Ansprüche 13 bis 14, wobei der Tank (10) mit einem Deckschacht (30) assoziiert ist, und wobei der Deckschacht die Tankschnittstelle (120) umfasst.

16. Verfahren zum Inspizieren einer Innenfläche (118) eines Ladetanks (10) für ein Fluid mittels einer Inspektionskameraanordnung (50), wobei der Ladetank (10) eine eingetauchte Ladepumpe (20) und optional mindestens eine Zwischenhalterung (40) und eine Tankschnittstelle (120) umfasst, wobei die Inspektionskameraanordnung (50) zum Einführen in das Tankinnere über die Tankschnittstelle (120) konfiguriert ist, wobei die Inspektionskameraanordnung ferner eine Inspektionskamera (51), ein an die Inspektionskamera (51) angeschlossenes Kabel (52) und ein eine erste Kabellänge haltendes Kabelhalterohr (54) umfasst, wobei das Kabelhalterohr (54) eine längliche Form aufweist und ein erstes Rohrende (541) und ein zweites Rohrende (542) aufweist, und das Kabelhalterohr (54) einen ersten Abschnitt (510) und einen zweiten Abschnitt (520) umfasst, wobei der erste Abschnitt (510) an einem gemeinsamen Übergangspunkt (TP) in den zweiten Abschnitt (520) übergeht, und wobei der erste Abschnitt (510) in einer ersten gemeinsamen Ebene (CP) mit dem zweiten Abschnitt (520) eine gekrümmte Sektion (CS1) und/oder eine in Bezug auf den zweiten Abschnitt (520) geneigte Sektion (SI1) umfasst, wobei die Inspektionskameraanordnung (50) ferner einen Montagesatz (60) umfassend eine flexible Schleuse (61) und eine Montagevorrichtung (65) umfasst, wobei jdie flexible Schleuse und die Montagevorrichtung jeweils einen Kanal (610; 650) für die Inspektionskamera (51) und mindestens einen Abschnitt des Kabels (52) und des Kabelhalterohrs (54) umfasst, und wobei die Montagevorrichtung (65) so konfiguriert ist, dass sie an die Tankschnittstelle (120) an einer oberen Wand (110) des Tanks (10) angeschlossen werden kann, und wobei der Kanal (650) der Montagevorrichtung (65) so konfiguriert ist, dass er geöffnet und geschlossen werden kann, und wobei die flexible Schleuse (61) ein zum Anschließen an die Montagevorrichtung (65) konfiguriertes Anschlussende (63) und ein dem Anschlussende (63) gegenüberliegendes Aufnahmeende (64) umfasst, wobei das Verfahren Folgendes umfasst:
Befördern der Inspektionskamera (51) und mindestens eines Abschnitts des Kabelhalterohrs (54) in das Innere des Ladetanks (10) für ein Fluid und der Tankschnittstelle (120) durch Schieben und Kippen des Kabelhalterohrs (54) durch die Tankschnittstelle (120);
Positionieren der Inspektionskamera (51) mittels des Kabelhalterohrs (54) in einem Querabstand von der eingetauchten Ladepumpe (20) und/oder der optionalen mindestens einen Zwischenhalterung (40) und optional Drehen oder Wenden des Kabelhalterohrs (54), so dass der Querabstand erreicht wird;
Absenken der Inspektionskamera (51) an einen gewünschten Inspektionsort mittels des Kabels (52) der Inspektionskameraanordnung (50), wobei das Kabel (52) an die Inspektionskamera (51) angeschlossen ist.

17. Verfahren nach Anspruch 16, wobei das Verfahren ferner Folgendes umfasst:
Anheben der Inspektionskamera (51) durch Ziehen des Kabels (52) nach Beendigung einer visuellen Inspektion,
Herausziehen der Inspektionskamera (51) und des Kabelhalterohrs (54) durch die Tankschnittstelle (120).

## Revendications

1. Agencement de caméra d'inspection (50) pour une inspection visuelle à distance d'un intérieur d'une citerne de cargaison (10) pour un fluide, comprenant :
une caméra d'inspection (51) ;
un câble (52) comportant une première extrémité (521) connectée à la caméra d'inspection (51) et une seconde extrémité (522) opposée à la première extrémité (521) ;
un tube de support de câble (54) adapté pour supporter une première longueur de câble positionnée entre les première et seconde extrémités (521 ; 522) du câble (52), le câble (52) étant agencé de façon coulissante à l'intérieur du tube de support de câble (54), dans lequel :
le tube de support de câble (54) présente une forme allongée et comporte une première extrémité de tube (541) et une seconde extrémité de tube (542), et
le tube de support de câble (54) comprend une première partie (510) et une seconde partie (520), dans lequel la première partie (510) réalise une transition vers la seconde partie (520) au niveau d'un point de transition commun (TP), et dans lequel la première partie (510) comprend, dans un premier plan commun (CP) avec la seconde partie (520) :
une section incurvée (CS1) et/ou
une section inclinée (SI1) par rapport à la seconde partie (520),
dans lequel l'agencement de caméra d'inspection (50) comprend en outre un ensemble de montage (60) comprenant un sas souple (61) et un dispositif de montage (65), dans lequel chaque élément parmi le sas souple et le dispositif de montage comprend un canal (610 ; 650) pour la caméra d'inspection (51) et au moins une partie du câble (52) et du tube de support de câble (54), et dans lequel
le dispositif de montage (65) est configuré pour pouvoir être connecté à une interface de citerne (120) au niveau d'une paroi supérieure (110) de la citerne (10) et dans lequel le canal (650) du dispositif de montage (65) est configuré pour pouvoir être ouvert et fermé, et
le sas souple (61) comprend une extrémité de connexion (63) qui est configurée pour pouvoir être connectée au dispositif de montage (65) et une extrémité de réception (64) opposée à l'extrémité de connexion (63).

2. Agencement de caméra d'inspection selon la revendication 1, dans lequel la première extrémité de tube (541) et la seconde extrémité de tube (542) sont décalées latéralement l'une par rapport à l'autre dans le premier plan commun (CP).

3. Agencement de caméra d'inspection selon la revendication 1 ou 2, dans lequel la première partie (510) comprend une section inclinée (SI1) selon un angle de 5 à 45° par rapport à la seconde partie (520) dans le premier plan commun (CP).

4. Agencement de caméra d'inspection selon l'une quelconque des revendications 1 à 3, dans lequel la seconde partie (520) comprend :
une section sensiblement rectiligne (SS2) qui est sensiblement parallèle à une extension longitudinale (L) du tube de support de câble (54), et/ou
une section incurvée (CS2).

5. Agencement de caméra d'inspection selon l'une quelconque des revendications 1 à 4, dans lequel la première partie (510) comprend une section incurvée (CS1) qui réalise une transition vers une section incurvée (CS2) de la seconde partie au niveau du point de transition commun (TP), et dans lequel le tube de support de câble (54) est sensiblement en forme d'arc.

6. Agencement de caméra d'inspection (50) selon l'une quelconque des revendications précédentes, dans lequel la seconde extrémité de tube (542) est configurée pour être maintenue à l'extérieur de l'intérieur de la citerne (10) et est associée à une partie protubérante s'étendant transversalement (544) qui est optionnellement associée à un agencement de retenue (546).

7. Agencement de caméra d'inspection (50) selon l'une quelconque des revendications précédentes, dans lequel la dimension en coupe transversale la plus grande de la caméra d'inspection est inférieure à 2,54 cm (1 pouce).

8. Agencement de caméra d'inspection selon l'une quelconque des revendications précédentes, dans lequel le sas souple (61) comprend un soufflet.

9. Agencement de caméra d'inspection selon l'une quelconque des revendications précédentes, dans lequel l'extrémité de réception (64) du sas souple (61) comprend un moyen d'étanchéité (62) pour empêcher qu'un gaz de protection à l'intérieur de la citerne (10) ne s'échappe entre le sas (61) et le tube de support de câble (54).

10. Agencement de caméra d'inspection selon l'une quelconque des revendications précédentes, dans lequel l'extrémité de connexion (63) du sas souple comprend un moyen de verrouillage.

11. Agencement de caméra d'inspection selon l'une quelconque des revendications précédentes, dans lequel le dispositif de montage comprend une soupape pouvant être ouverte et fermée.

12. Agencement de caméra d'inspection selon l'une quelconque des revendications précédentes, dans lequel le canal (610) du sas souple (61) et le canal (650) du dispositif de montage (65) présentent chacun une dimension en coupe transversale minimum supérieure ou égale à 2,54 cm (1 pouce).

13. Citerne à cargaison (10) pour un fluide comprenant une paroi supérieure (110), au moins une paroi latérale (114 ; 116) et une paroi inférieure (112) définissant un volume de citerne, dans laquelle la citerne à cargaison (10) comprend l'agencement de caméra d'inspection (50) selon l'une quelconque des revendications précédentes 1 à 12, dans laquelle la paroi supérieure (110) comprend une interface de citerne (120) configurée pour être connectée à l'agencement de caméra d'inspection (50), et dans laquelle le tube de support de câble (54) de l'agencement de caméra d'inspection (50) est configuré pour être poussé au travers de l'interface de citerne (120) par un mouvement d'inclinaison et pour être positionné dans l'interface de citerne (120) de telle sorte que la caméra d'inspection (51) puisse être abaissée dans l'intérieur de citerne à une distance transversale par rapport à un chemin vertical défini par l'interface de citerne (120).

14. Citerne à cargaison (10) pour un fluide selon la revendication 13, dans laquelle la citerne à cargaison (10) comprend une pompe de cargaison immergée (20) agencée pour vider un contenu de fluide de la citerne et au moins un support intermédiaire (40) suivant l'extension verticale de la pompe de cargaison immergée et dans laquelle la pompe de cargaison immergée (20) et/ou l'au moins un support intermédiaire (40) sont/est localisé(e)(s) dans le chemin vertical défini par l'interface de citerne ou à proximité de celui-ci.

15. Citerne à cargaison (10) pour un fluide selon l'une quelconque des revendications 13 à 14, dans laquelle la citerne (10) est associée à un tambour de pont (30), et dans laquelle le tambour de pont comprend l'interface de citerne (120).

16. Procédé pour inspecter une surface intérieure (118) d'une citerne à cargaison (10) pour un fluide au moyen d'un agencement de caméra d'inspection (50), la citerne à cargaison (10) comprenant une pompe de cargaison immergée (20) et optionnellement au moins un support intermédiaire (40) et une interface de citerne (120), dans lequel l'agencement de caméra d'inspection (50) est configuré pour être inséré dans l'intérieur de citerne *via* l'interface de citerne (120), l'agencement de caméra d'inspection comprenant en outre une caméra d'inspection (51), un câble (52) connecté à la caméra d'inspection (51) et un tube de support de câble (54) qui supporte une première longueur de câble, dans lequel le tube de support de câble (54) présente une forme allongée et comporte une première extrémité de tube (541) et une seconde extrémité de tube (542), et le tube de support de câble (54) comprend une première partie (510) et une seconde partie (520), dans lequel la première partie (510) réalise une transition vers la seconde partie (520) au niveau d'un point de transition commun (TP), et dans lequel la première partie (510) comprend, dans un premier plan commun (CP) avec la seconde partie (520), une section incurvée (CS1) et/ou une section inclinée (SI1) par rapport à la seconde partie (520), l'agencement de caméra d'inspection (50) comprenant en outre un ensemble de montage (60) comprenant un sas souple (61) et un dispositif de montage (65), dans lequel chaque élément parmi le sas souple et le dispositif de montage comprend un canal (610 ; 650) pour la caméra d'inspection (51) et au moins une partie du câble (52) et du tube de support de câble (54), et dans lequel le dispositif de montage (65) est configuré pour pouvoir être connecté à l'interface de citerne (120) au niveau d'une paroi supérieure (110) de la citerne (10) et dans lequel le canal (650) du dispositif de montage (65) est configuré pour pouvoir être ouvert et fermé, et dans lequel le sas souple (61) comprend une extrémité de connexion (63) qui est configurée pour pouvoir être connectée au dispositif de montage (65) et une extrémité de réception (64) opposée à l'extrémité de connexion (63), le procédé comprenant :
le déplacement de la caméra d'inspection (51) et d'au moins une partie du tube de support de câble (54) dans l'intérieur de la citerne à cargaison (10) pour un fluide et de l'interface de citerne (120) en poussant et en inclinant le tube de support de câble (54) au travers de l'interface de citerne (120) ;
le positionnement, au moyen du tube de support de câble (54), de la caméra d'inspection (51) à une distance transversale de la pompe de cargaison immergée (20) et/ou de l'au moins un support intermédiaire optionnel (40) et optionnellement, la rotation du tube de support de câble (54) ou le fait de le faire tourner de telle sorte que la distance transversale soit atteinte ;
l'abaissement de la caméra d'inspection (51) jusqu'à une localisation d'inspection souhaitée au moyen du câble (52) de l'agencement de caméra d'inspection (50), le câble (52) étant connecté à la caméra d'inspection (51).

17. Procédé selon la revendication 16, le procédé comprenant en outre :
après que l'inspection visuelle est terminée, le relèvement de la caméra d'inspection (51) en tirant le câble (52),
le fait de tirer la caméra d'inspection (51) et le tube de support de câble (54) par l'interface de citerne (120).
